# EUROPEAN PATENT APPLICATION

(11) **EP 2 549 571 A1**
(43) Date of publication of application: **23.01.2013**
(21) Application number: 11756093.8
(22) Date of filing: 03.03.2011
(51) Int. Cl.: H01M 4/88, H01M 8/10

(54) **SLURRY FOR ELECTRODE CATALYST LAYER OF FUEL CELL, ELECTRODE CATALYST LAYER, MEMBRANE ELECTRODE ASSEMBLY, AND FUEL CELL**

(30) Priority: 15.03.2010 JP 2010057368
(71) Applicant: Toppan Printing Co., Ltd., Tokyo 110-0016 (JP)
(72) Inventor: KISHI Katsuyuki, Tokyo 110-0016 (JP)
(74) Representative: Staudt, Hans-Peter
(86) International application number: PCT/JP2011/054987
(87) International publication number: WO 2011/114904

(57) **Abstract**

The present invention has an object to solve the problem by providing a fuel cell electrode catalyst layer with ease capable of exhibiting good output property on both low-humidified and high-humidified conditions, in a fuel cell electrode. The problem is solved in slurry including at least electrolytes, catalyst particles, and solvents, the solvents include two or more types of solvents and the two or more types of solvents cause a phase separation.

## Description

### Technical Field

The present invention relates to slurry for a fuel cell electrode catalyst layer capable of constituting a fuel cell electrode catalyst layer of a polymer electrolyte fuel cell, and an electrode catalyst layer, a membrane electrode assembly, and a fuel cell using the same.

### Background Art

In these years, fuel cells get attention as an effective solution for environmental issues or energy problems. In the fuel cell, fuel such as hydrogen is oxidized by use of an oxidizing agent such as oxygen to covert a chemical energy in the course thereof into an electric energy.
Fuel cells are categorized into alkaline type, phosphoric acid type, polymer electrolyte type, molten carbonate type, and solid oxide type, according to the type of electrolyte. Polymer Electrolyte Fuel Cell (PEFC) operates at a low temperature and has a high power density to enable downsizing and light-weighting, and therefore, applications thereof are expected as a portable power supply, a household power supply, and an in-vehicle power source.

Polymer Electrolyte Fuel Cell (PEFC) has a structure in which a polymer electrolyte membrane that is a polymer electrolyte membrane is interposed between a fuel electrode (anode) and an air electrode (cathode). A fuel gas including hydrogen is supplied to the fuel electrode side and an oxidant gas is supplied to the air electrode side, and the power is generated by the following electrochemical reactions.

Anode: H₂ → 2H⁺ + 2e⁻ (1)

Cathode: (1/2)O₂ + 2H⁺ + 2e⁻ → H₂O (2)

The fuel gas supplied to the anode side is converted into protons and electrons by the electrode catalyst (Reaction 1) . The protons pass through the polymer electrolyte and a solid polymer electrolyte membrane in an anode electrode catalyst layer, and moves to the cathode. The electrons pass through an external circuit and moves to the cathode. In the cathode, the protons, the electrons, and the oxidant gas supplied from the exterior are reacted to produce water (Reaction 2). Therefore, the above electrochemical reaction occurs at a three-phase interface among a proton (electrolyte), an electron (catalyst ● support), and a reactant gas.

At present, there is a demand for a fuel cell that exhibits a superior output property even on a low-humidified condition, for reducing the costs of the fuel cells. On the low-humidified condition, however, the moisture content of the electrolyte is lowered and the proton conductivity is lowered. This prevents the proton from reaching the three-phase interface, and deteriorates the output property. In order to improve the proton conductivity and water retentivety, it is desirable to increase the electrolyte content in the electrode catalyst layer. However, the increased content will prevent the supply of the reactant gas, and the outputs will be reduced. Besides, on a high-humidified condition, expansion of electrolyte further prevents the gas supply and the outputs will be reduced drastically.

In order to address these issues, there is a proposal for an electrode catalyst layer where the polymer electrolyte side has a greater electrolyte content in the electrode catalyst layer, whereas the gas supply side has a smaller electrolyte content. However, this poses a problem that the number of producing processes is increased (Patent Document 1) .

### Prior Art Document

### Patent Document

Patent Document 1: JP 2009-295341 A

### Summary of the Invention

### Problem to be Solved

The present invention has an object to provide a fuel cell electrode catalyst layer capable of exhibiting good output property on both low-humidified and high-humidified conditions in a fuel cell electrode, in an easy manner.

### Solution to the Problem

In order to solve the above problems, the inventors of the present invention have eagerly studied. As a result, they have made the present invention with findings that in the slurry including at least electrolytes, catalyst particles, and solvents, when the slurry for the fuel cell electrode catalyst layer in which the solvents include two or more types of solvents and the two or more types of solvents cause a phase separation is used, it is possible to provide a fuel cell having good at gas diffusibility, water retentivity, and proton conductivity, and exhibiting good output property on both low-humidified and high-humidified conditions.

That is, according to the invention recited in claim 1 of the present invention, there is provided slurry for a fuel cell electrode catalyst layer, the slurry comprising at least: electrolytes; catalyst particles; and solvents, wherein the solvents include two or more types of solvents, and the two or more types of solvents cause a phase separation.

Next, according to the invention recited in claim 2, in the configuration recited in claim 1, a mixed solution of the electrolytes and the solvents may form colloid.

Next, according to the invention recited in claim 3, in the configuration recited in claim 1, a mixed solution of the electrolytes and the solvents may be formed of emulsion.

Next, according to the invention recited in claim 4, in the configuration recited in any one of claim 1 to claim 3, the solvents may include a poor solvent and a good solvent to the electrolytes.

Next, according to the invention recited in claim 5, in the configuration recited in claim 4, a mass ratio of the good solvent to the poor solvent may fall in a range from 0.8 to 10.

Next, according to the invention recited in claim 6, there is provided an electrode catalyst layer using the slurry for the fuel cell electrode catalyst layer recited in any one of claim 1 to claim 5.

Next, according to the invention recited in claim 7, there is provided a membrane electrode assembly using the slurry for the fuel cell electrode catalyst layer recited in any one of claim 1 to claim 5.

Next, according to the invention recited in claim 8, there is provided a fuel cell using the slurry for the fuel cell electrode catalyst layer recited in any one of claim 1 to claim 5.

### Advantageous Effects of the Invention

In the slurry for a fuel cell electrode catalyst layer, as recited in claim 1 of the present invention, remarkable effects can be expected such that it is possible to produce with ease a fuel cell electrode catalyst layer that has good at gas diffusibility, water retentivity, and proton conductivity, and exhibits good output property on both low-humidified and high-humidified conditions.

In the slurry for a fuel cell electrode catalyst layer, as recited in claim 2 of the present invention, further remarkable effects can be expected such that it is possible to provide the fuel cell catalyst electrode that is good at proton conductivity when the more electrolytes are applied to the catalyst.

In the slurry for a fuel cell electrode catalyst layer, as recited in claim 3 of the present invention, further remarkable effects can be expected such that it is possible to provide the fuel cell catalyst electrode that is good at gas diffusibility in a state of emulsion.

In the slurry for a fuel cell electrode catalyst layer, as recited in claim 4 of the present invention, further remarkable effects can be expected such that it is possible to provide the fuel cell catalyst electrode provided with the electrode catalyst layer with which a good electrolyte network is formed.

In the slurry for a fuel cell electrode catalyst layer, as recited in claim 5 of the present invention, further remarkable effects can be expected such that it is possible to provide the fuel cell catalyst electrode provided with the electrode catalyst layer having an optimal quantity of the vacancies.

In the invention as recited in claim 6 of the present invention, further remarkable effects can be expected such that it is possible to produce with ease the catalyst layer good at the proton conductivity, gas diffusibility, and water retentivity.

In the invention as recited in claim 7 of the present invention, further remarkable effects can be expected such that it is possible to produce with ease the membrane electrode assembly good at the proton conductivity, gas diffusibility, and water retentivity.

In the invention as recited in claim 8 of the present invention, further remarkable effects can be expected such that it is possible to produce with ease the fuel cell that is good at the proton conductivity, gas diffusibility, and water retentivity, and that exhibits good output property on both low-humidified and high-humidified conditions.

### Brief Description of the Drawings

FIG. 1A and FIG. 1B are schematic views illustrative of slurry for a fuel cell electrode catalyst layer, according to an embodiment of the present invention;
FIG. 2 is a cross-sectional view illustrative of an example of a membrane electrode assembly, according to an embodiment of the present invention; and
FIG. 3 is an exploded cross-sectional view illustrative of a configuration of a single cell of the fuel cell to which the membrane electrode assembly is assembled.

### Description of Embodiments

Hereinafter, embodiments of the present invention will be described with reference to the drawings.
The present embodiment relates to a fuel cell electrode catalyst layer of a polymer electrolyte fuel cell, and slurry for the fuel cell electrode catalyst layer, the slurry including at least electrolytes 13, catalyst particles constituting a catalyst 14, and solvents, and the solvents include two or more types of solvents and the solvents cause a phase separation.

### (Slurry for the fuel cell electrode catalyst layer)

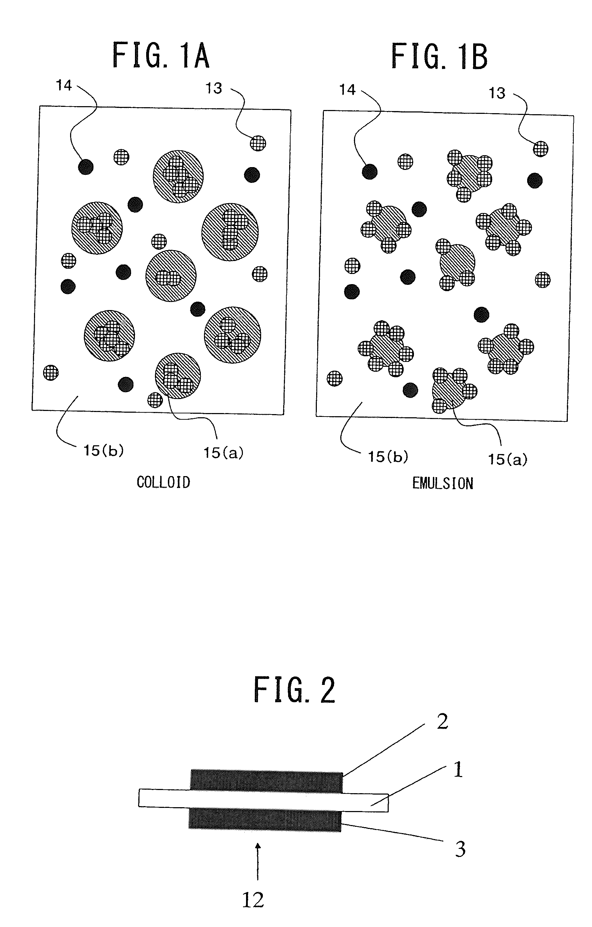

FIG. 1A and FIG. 1B are schematic views of slurry for the fuel cell electrode catalyst layer according to the present embodiment. FIG. 1A illustrates a case where a mixed solution of electrolytes and solvents forms colloid, and FIG. 1B illustrates a case where the mixed solution of the electrolytes and the solvents is formed of emulsion.
Referring to FIG. 1A and FIG. 1B, the solvents of the slurry for the fuel cell electrode catalyst layer according to the present invention include, for example, two types of: a poor solvent 15 (a) to the electrolytes; and a good solvent 15 (b) to the electrolytes. These two types of solvents 15 (a) and 15(b) are not mixed together and cause the phase separation. Since the two types of solvents 15 (a) and 15 (b) cause a phase separation, the electrolytes 13 can be locally existent in the slurry. This makes the networks of the electrolytes 13 good, so that the electrode catalyst layer good at the proton conductivity and water retention property is obtainable.

The electrolytes 13 dissipates in the solvent (the poor solvent 15(a)) to form colloid particles (FIG. 1A). Alternatively, the electrolytes 13 get together at solvent-solvent interface, where the phase separation is caused, to form emulsion (FIG. 1B).

When the electrolytes 13 form the colloid particles, or when the electrolytes 13 get together at the solvent-solvent interface to form the emulsion, the concentration of the electrolytes 13 are locally higher than a case where the electrolytes 13 dissipate in the good solvent 15(b). The formation of the colloid particles or emulsion makes the networks of the electrolytes 13 good, and the use of the slurry for the fuel cell electrode catalyst layer including the good networks of the electrolytes 13 improves the proton conductivity and water retentivity of the electrode catalyst layer.
In addition, the quantity of the poor solvent 15(a) is controlled to control the networks of the electrolytes 13. As an optimal mass ratio of the good solvent 15 (b) to the poor solvent 15(a) to control the networks, preferably, the good solvent 15 (b) falls in a range from 0.1 to 10, more preferably, in a range from 0.5 to 7, to the poor solvent 15 (a) being set to 1. When the good solvent 15 (b) is smaller than 0. 1, more colloid particles are existent and the slurry cannot be applied. On the other hand, when the good solvent 15 (b) is greater than 10, which becomes difficult for the electrolyte 13 to form the colloid particles.

As a solvent commonly used, water, alcohol such as methanol, ethanol, 1-propanol, 2-propanol, 1-butanol, 2-butanol, isobutyl alcohol, and tert-butyl alcohol, ketone such as acetone, methyl ethyl ketone, methyl propyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, and diisobutyl ketone, ether such as tetrahydrofuran, tetrahydropyran, dioxan, diethylene glycol dimethyl ether, anisole, methoxytoluene, diethyl ether, diisopropyl ether, and dibutyl ether, amine such as isopropylamine, butylamine, isobutylamine, cyclohexylamine, diethylamine, and aniline, ester such as propyl formate, formic acid isobutyl ester, amyl formate, ethyl acetate, propyl acetate, butyl acetate, isobutyl acetate, pentyl acetate, isopentyl acetate, methyl propionate, ethyl propanoate, and butyl propionate. In addition, acetic acid, propionic acid, dimethylformamide, dimethylacetamide, and N-methylpyrrolidone may be used. Furthermore, as glycol and glycol ether-based solvents, there are ethyleneglycol, diethylene glycol, propylene glycol, ethylene glycol monomethyl ether, ethylene glycol dimethyl ether, ethylene glycol diethyl ether, diacetone alcohol, 1-methoxy-2-propanol, and 1-ethoxy-2-propanol.

The poor solvent 15 (a) has a low capability of dissolving the solute, has a very strong mutual energy between solvent molecules, and the arithmetic average of the mutual energy between the solute molecules and that between solvent molecules is remarkably higher than the mutual energy between the solute molecule and solvent molecule. (see "Kagaku Dai Jiten" published by KYORITSU SHUPPAN CO., LTD.)
For example, as the poor solvent 15(a) when Nafion (R) (registered trademark) is used for the electrolyte, water, acid such as butyric acid, valeric acid, hexanoic acid, and octanoic acid, hexane, cyclohexane, benzene, toluene, o-xylene, m-xylene, p-xylene, p-cymene, and dipentene can be used. In particular, the use of water is preferable.
In addition, the good solvent 15(b) is a solvent having a high capability of dissolving the solute.
For example, as the good solvent 15 (b) when Nafion (R) (registered trademark) is used for the electrolyte, alcohol such as methanol, ethanol, 1-propanol, 2-propanol, 1-butanol, 2-butanol, isobutyl alcohol, and tert-butyl alcohol, ketone such as acetone, methyl ethyl ketone, methyl propyl ketone, methyl butyl ketone, and methyl isobutyl ketone, diethyl ether, isopropylamine, ethyl acetate, ethyleneglycol, propylene glycol, ethylene glycol monomethyl ether, dimethylformamide, dimethylacetamide, and N-methylpyrrolidone can be used. In particular, the use of alcohol such as 1-butanol, 2-butanol, isobutyl alcohol, or tert-butyl alcohol, or methyl acetate, or diethyl ether is preferable.

When the mixed solution of the electrolytes and the solvents is formed of the emulsion, it is preferable that two or more types of solvents to be used should have different boiling points. The use of the solvents having different boiling points enables the formation of vacancies with ease in the electrode catalyst layer formed of the slurry for the fuel cell electrode catalyst layer.
For example, when two types of solvents are used, it is preferable that the difference in the boiling point should be 5 °C to 100 °C. If the difference in the boiling point is smaller than 5 °C, two types of solvents will evaporate at the same time and the formation of the vacancies will be difficult. On the other hand, if the difference in the boiling point is greater than 100 °C, it will be difficult to remove the solvent having a higher boiling point. In this situation, it is preferable that the solvent having a higher boiling point should be the poor solvent 15 (a) and the solvent having a lower boiling point should be the good solvent 15 (b), out of the two types of the solvents.
In addition, it is made possible to control the quantity of the vacancies in the electrode catalyst layer formed of the slurry for the fuel cell electrode catalyst layer, by changing the ratios of the two or more types of solvents. As an optimal mass ratio of the good solvent 15(b) to the poor solvent 15(a) to control the quantity of the vacancies, preferably, the good solvent 15 (b) falls in a range from 0.8 to 10, more preferably, in a range from 1.5 to 8, to the poor solvent 15(a) being set to 1. When the good solvent 15(b) is smaller than 0.8, the electrolytes 13 are not capable of forming the colloid particles or emulsion in a stable manner. On the other hand, when the good solvent 15 (b) is higher than 10, the electrolyte 13 can form the colloid particles or emulsion, but there are fewer networks and good networks cannot be formed.

The slurry for the fuel cell electrode catalyst layer according to the present invention may include another solvent, in addition to the two types of solvents 15(a) and 15 (b). Another solvent is not limited in particular, as long as it does not prevent the phase separation of the two types of solvents 15(a) and 15(b).

Whether the mixed solution of the electrolytes and the solvent forms the colloid or the emulsion depends on the type, ratios, temperatures, pH values, and the like of the solvent. As to the slurry for the fuel cell electrode catalyst layer according to the present invention, however, the two or more types of solvents included in the slurry for the fuel cell electrode catalyst layer may be provided, as long as they cause a phase separation. It is more preferable that the slurry for the fuel cell electrode catalyst layer should form the colloid particles or emulsion, by suitably adjusting the type, ratios, temperatures, pH values, and the like of the solvent.

High polymer having a hydrophilic group and a hydrophobic group is used for the electrolyte 13. As the hydrophilic group, acidic group and basic group are included. Especially, the acidic group is suitable. Sulfonate group or phosphonic acid group is preferable, and the sulfonate group is particularly preferable.
To be specific, there are perfluorosulfonic acid-based resin such as Nafion (R) (registered trademark), Flemion (registered trademark), and Aciplex (registered trademark), aliphatic system sulfonic acid type resin such as polystyrene sulfonic acid, and aromatic system sulfonic acid type resin such as sulfonated polyethersulfone. The aromatic system sulfonic acid type resin is good at heat resistance, and is more preferable.
Preferably, the electrolyte 13 is included in the slurry for the fuel cell electrode catalyst layer, by 0.2 mass% to 23.0 mass%.

### (Membrane electrode assembly)

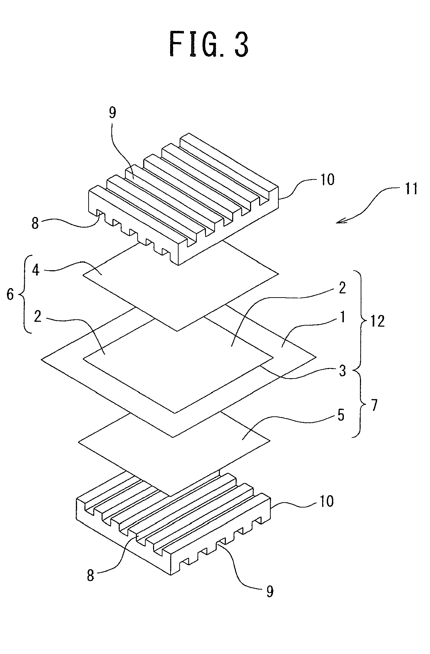

FIG. 2 is a cross-sectional view of a membrane electrode assembly according to an embodiment of the present invention.
A membrane electrode assembly 12 according to the present embodiment has a layered structure as illustrated in FIG. 3.
That is, the membrane electrode assembly 12 is formed by joining and laminating an air electrode side electrode catalyst layer 2 and a fuel electrode side electrode catalyst layer 3 on both sides of a polymer electrolyte membrane 1, respectively. The electrode catalyst layers 2 and 3 are constituted by carbon black particles, a catalyst, each serving as a conducting agent, and the electrolytes 13 for the fuel cell electrode produced as described above.

As metal catalyst particles that are the catalyst 14 used in the present embodiment, platinum group metal such as platinum, palladium, ruthenium, iridium, rhodium, and osmium can be used. In addition, metal such as iron, lead, copper, chrome, cobalt, nickel, manganese, vanadium, molybdenum, gallium, and aluminum, or oxide thereof or complex oxide thereof can be used. Above all, platinum or platinum alloy is preferable. In addition, too big particle size of the catalyst 14 degrades the activity of the catalyst 14 and too small particle size degrades the stability thereof. Therefore, 0.5 nm to 20 nm is preferable. 1 nm to 5 nm is more preferable.
Preferably, the catalyst 14 is included in the slurry for the fuel cell electrode catalyst layer by 0.3 mass% to 15.0 mass%.

These metal catalyst particles may be included in the slurry for the fuel cell electrode catalyst layer in a state of being supported by a conducting agent having electron conductivity. In general, carbon particles are used for the conducting agent having electron conductivity to be used for supporting the metal catalyst particles, according to the present embodiment. The carbon particles may be any type, as long as they are fine particles and have electrical conductivity and are not affected by the catalyst 14. However, carbon black, graphite, black lead, activated carbon, carbon fiber, carbon nanotube, and fullerene can be used. Too small particle size of the carbon particles makes it difficult to form an electronic conductivity path, and too big particle size thickens the electrode catalyst layer, increase the resistance thereof, and degrade the output property. In consideration of this, 10 nm to 1000 nm is preferable. 10 nm to 100 nm is more preferable.
Preferably, the conducting agent having electron conductivity for supporting the metal catalyst particles is included in the slurry for the fuel cell electrode catalyst layer by 0.5 mass% to 35.0 mass%.

### (Single cell of polymer electrolyte fuel cell)

FIG. 3 is an exploded cross-sectional view illustrative of a configuration of a single cell of the polymer electrolyte fuel cell, to which the membrane electrode assembly 12 is assembled, according to an embodiment of the present invention.
An air electrode side diffusion layer 4 and a fuel electrode side diffusion layer 5, each having a structure in which a mixture of carbon black and polytetrafluoroethylene (PTFE) is applied to a carbon paper, are disposed to be opposite to the air electrode side electrode catalyst layer 2 and the fuel electrode side electrode catalyst layer 3 of the membrane electrode assembly, respectively. In this manner, an air electrode 6 and a fuel electrode 7 are formed. Then, there are gas passages 8 for circulating reactant gases to face the air electrode side diffusion layer 4 and the fuel electrode side diffusion layer 5. A single cell 11 is constituted by sandwiching the air electrode 6 and the fuel electrode 7 with a pair of separators 10, having coolant passages 9 for circulating the coolant on main surfaces opposite to each other, and made of materials having electrical conductivity and gas impermeability. Hence, the oxidizing agent such as air or oxygen is supplied to the air electrode 6, and the fuel gas including hydrogen or organic fuel is supplied to the fuel electrode 7, so as to generate the power.

### (Manufacturing method of membrane electrode assembly)

An example of a producing method of the membrane electrode assembly according to the present embodiment will be further described.
The slurry for the fuel cell electrode catalyst layer according to the present invention is applied onto the gas diffusion layers 4 and 5, made of porous bodies having the electrical conductivity, for supplying gas into the electrode catalyst layers 2 and 3. Then, the slurry is dried to laminate the electrode catalyst layers 2 and 3. Subsequently, the polymer electrolyte membrane 1 is sandwiched by the electrode catalyst layers 2 and 3 and jointed by thermocompression bonding to produce a Membrane Electrode Assembly (MEA) 12. Doctor blade method, screen printing method, spray method, and the like can be used as a method of applying the slurry for the fuel cell electrode catalyst layer to form the catalyst layers 2 and 3 on the gas diffusion layers 4 and 5.
In addition, as a producing method of the MEA 12, the electrode catalyst layers 2 and 3 may be formed by transcription or spray atomization on both surfaces of the polymer electrolyte membrane 1, and then may be sandwiched by the gas diffusion layers 4 and 5.

### (Effects of present embodiment)

In the slurry for the fuel cell electrode catalyst layer including at least the electrolyte, catalyst particles, and solvents, the solvents include two or more types of solvents and the two or more types of solvents cause a phase separation. This makes it possible to produce the fuel cell electrode catalyst layer having good gas diffusibility, water retentivity, and proton conductivity and exhibiting good output property on both low-humidified and high-humidified conditions, in an easy manner.

The mixed solution of the above electrolytes and the above solvents forms colloid. In this manner, as the electrolyte coats the solvent more, it is possible to provide a fuel cell catalyst electrode having good proton conductivity.
Alternatively, the mixed solution of the above electrolytes and the above solvents is made of emulsion. In this manner, the state of emulsion makes it possible to provide a fuel cell catalyst electrode having good gas diffusibility.

Then, it is possible to produce the catalyst layer having good proton conductivity, gas diffusibility, and water retentivity, by use of the above-described slurry for the fuel cell electrode catalyst layer. It is also possible to produce the membrane electrode assembly having good proton conductivity, gas diffusibility, and water retentivity, and it is further possible to produce the fuel cell having good proton conductivity, gas diffusibility, and water retentivity, on low-humidified and high-humidification conditions.

### Examples

Hereinafter, the present invention will be described in more detail with examples, but the present invention is not limited to these examples.

### (Power generating performance evaluation)

An evaluation has been made with the use of a commercially available JARI standard cell. The cell temperature is set to 80 °C, humidified hydrogen is supplied to the anode, and humidified air is supplied to the cathode. As a humidified condition, the relative humidity is set to 100 % and 30 %.

### (Example 1)

### (Production of slurry for catalyst layer)

Platinum-supporting carbon (TEC10E50E, made by Tanaka Kikinzoku Kogyo) is placed in a container and mixed with water. Then, ethyl acetate and electrolyte 13 (Nafion (R) (registered trademark) dispersion liquid, Wako Pure Chemical Industries, Ltd.) each having the same quantity with water are added and stirred to obtain the slurry for the catalyst layer.
The composition ratio of the slurry for catalyst layer is listed as follows.

| | |
|---|---|
| Platinum-supporting carbon | 20.0 mass |
| Electrolyte | 10.0 mass |
| Water | 135.0 mass |
| Ethyl acetate | 135.0 mass |

The mixed solution of water and ethyl acetate cause a phase separation, and the mixed solution of electrolyte and solvent forms colloid.

### (Production of membrane electrode assembly)

After the slurry for the catalyst layer is coated over a polytetrafluoroethylene film (PTFE film) and dried to obtain the catalyst layer. Polymer electrolyte 1 (Nafion (R) (registered trademark) 212CS, made by DuPont) is sandwiched by the catalyst layers from top and bottom, and is subject to thermal pressure at 120 °C and 80kgf/cm² for 10 minutes. After the thermal pressure, the PTEF film is removed to obtain the membrane electrode assembly. The power generating performance evaluation has been conducted for the membrane electrode assembly by use of a power generating evaluation cell.

### (Example 2)

The slurry for the catalyst layer is produced in the same manner as Example 1 except that ethyl acetate of three times as much as water mass is used.
The phase separation is caused in the mixed solution of water and ethyl acetate, and the mixed solution of electrolyte and solvent forms the emulsion.
The membrane electrode assembly is formed in the same manner as Example 1, and the power generating performance evaluation has been conducted.

### (Comparative Example 1)

The slurry for the catalyst layer is produced in the same manner as Example 1 except that 2-propanol is used in place of ethyl acetate.
The phase separation is not caused in the mixed solution of water and 2-propanol, and neither colloid nor emulsion is formed in the mixed solution of electrolyte and solvent.
The membrane electrode assembly is formed in the same manner as Example 1, and the power generating performance evaluation has been conducted.

As to the membrane electrode assembly produced by Examples 1 and 2, the power generating performances of the slurry for the catalyst layer according to the present invention have exhibited better output property at the relative humidity of 100 % and 30 %, as compared to the comparative example 1, by 3 % and 6 %, respectively.
In this manner, it has been found that the use of the slurry for fuel cell electrode catalyst layer according to the present invention enables the provision of the good fuel cell electrode catalyst layer with ease on both low-humidified and high-humidified conditions.

### Industrial Availability

According to the present invention, in the slurry including at least electrolyte, catalyst particles, and solvents, the solvents including two or more types of solvents, when the slurry for fuel cell electrode catalyst layer in which the phase separation is caused is used, it is possible to produce the electrode catalyst layer for the fuel cell with ease that exhibits good output property on both low-humidified and high-humidified conditions. In addition, remarkable effects of providing the membrane electrode assembly and fuel cell can be expected, resulting in a high industrial utility value.

### Reference Signs List

- 1: polymer electrolyte
- 2: air electrode side electrode catalyst layer
- 3: fuel electrode side electrode catalyst layer
- 4: air electrode side diffusion layer
- 5: fuel electrode side diffusion layer
- 6: air electrode
- 7: fuel electrode
- 8: gas passage
- 9: coolant passage
- 10: separator
- 11: single cell
- 12: membrane electrode assembly
- 13: electrolyte
- 14: catalyst
- 15(a): poor solvent
- 15(b): good solvent

## Claims

1. Slurry for a fuel cell electrode catalyst layer, the slurry comprising at least: electrolytes; catalyst particles; and solvents, wherein the solvents include two or more types of solvents, and the two or more types of solvents cause a phase separation.

2. The slurry for the fuel cell electrode catalyst layer according to claim 1, wherein a mixed solution of the electrolytes and the solvents form colloid.

3. The slurry for the fuel cell electrode catalyst layer according to claim 1, wherein a mixed solution of the electrolytes and the solvents is formed of emulsion.

4. The slurry for the fuel cell electrode catalyst layer according to any one of claim 1 to claim 3, wherein the solvents include a poor solvent and a good solvent to the electrolytes.

5. The slurry for the fuel cell electrode catalyst layer according to claim 4, wherein a mass ratio of the good solvent to the poor solvent falls in a range from 0.8 to 10.

6. An electrode catalyst layer using the slurry for the fuel cell electrode catalyst layer according to any one of claim 1 to claim 5.

7. A membrane electrode assembly using the slurry for the fuel cell electrode catalyst layer according to any one of claim 1 to claim 5.

8. A fuel cell using the slurry for the fuel cell electrode catalyst layer according to any one of claim 1 to claim 5.
